# EUROPEAN PATENT APPLICATION

(11) **EP 3 614 327 A1**
(43) Date of publication of application: **26.02.2020**
(21) Application number: 18788525.6
(22) Date of filing: 26.02.2018
(51) Int. Cl.: G06Q 30/06, G06F 3/0481, G06F 3/16

(54) **INFORMATION PROCESSING DEVICE, INFORMATION PROCESSING METHOD, AND PROGRAM**

(30) Priority: 17.04.2017 JP 2017081246
(71) Applicant: Sony Corporation, Tokyo 108-0075 (JP)
(72) Inventor: IWAMURA, Atsushi, Tokyo 108-0075 (JP); OSHIMA, Koichi, Tokyo 108-0075 (JP); UKITA, Masakazu, Tokyo 108-0075 (JP); YANAGIMOTO, Takafumi, Tokyo 108-0075 (JP); HARA, Hiroshi, Tokyo 108-0075 (JP); KANO, Ritsuko, Tokyo 108-0075 (JP)
(74) Representative: MFG Patentanwälte Meyer-Wildhagen Meggle-Freund Gerhard PartG mbB
(86) International application number: PCT/JP2018/006907
(87) International publication number: WO 2018/193717

(57) **Abstract**

[Solving Means] An information processing device includes an acquisition unit, an order information generator, a communication unit, and a proposal information generator. The acquisition unit is configured to acquire user-presented information presented by a user. The order information generator is configured to omit non-sharable information from among the acquired user-presented information or to convert the non-sharable information into alternative information, and to generate order information on a basis of the user-presented information, the non-sharable information being information that is not allowed to be provided to an external device. The communication unit is configured to transmit the order information to the external device, and to receive external proposal information that is generated on a basis of the order information and transmitted by the external device. The proposal information generator is configured to generate proposal information on a basis of the external proposal information.

## Description

### Technical Field

The present technology relates to an information processing technology that recognizes information, such as sound, that is presented by a user, and provides feedback depending on the recognized information.

### Background Art

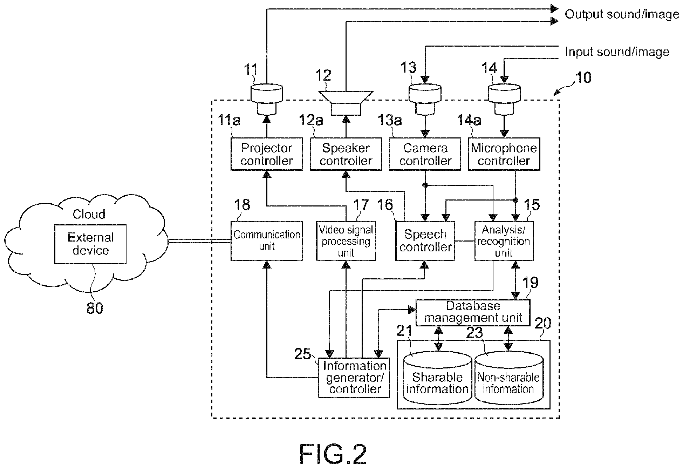

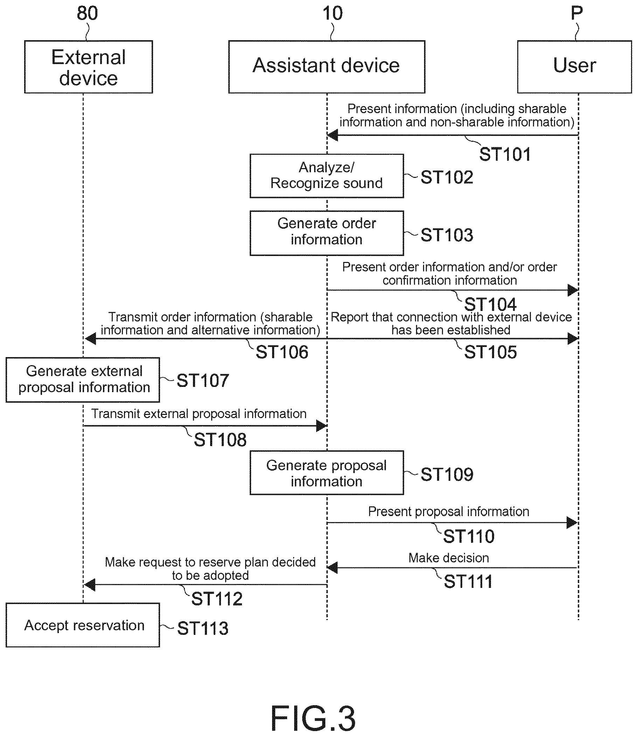

Patent Literature 1 discloses a device that causes an information processing device to perform various processes due to a user's speech or gesture. The device performs a sound analysis process on the speech of a user, analyzes an image of the behavior (gesture) of the user, and displays, for example, information including results of these analyses as feedback information. Further, the device displays and outputs a response to a user's request and a processing status of the information processing device through an avatar that is proxy for the information processing device (refer to, for example, paragraphs [0033], [0036], and [0042] of the specification, and Figs. 2 and 3).

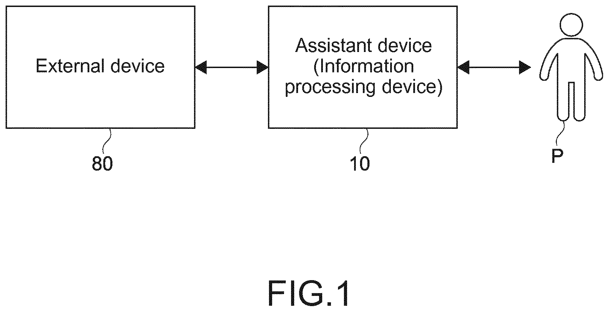

Patent Literature 2 discloses a system that generates agenda information using sound recognition means that converts sound information into text information. The system has stored therein information that specifies a user (user information), and stores therein sound input means used by the user in association with the user-specifying information. The system generates agenda information in which the user information is associated with text information into which sound information of the user has been converted (refer to, for example, paragraphs [0027] and [0029] of the specification, and Fig. 1) .

### Citation List

### Patent Literature

Patent Literature 1: Japanese Patent Application Laid-open No. 2011-209786
Patent Literature 2: Japanese Patent Application Laid-open No. 2009-86207

### Disclosure of Invention

### Technical Problem

The technologies such as those described above used to recognize information output by a user, are expected to be further developed in the future. Thus, there is a need to improve such technologies and their convenience.

An object of the present disclosure is to provide an information processing device, an information processing method, and a program for it that are more convenient for a user.

### Solution to Problem

In order to achieve the object described above, an information processing device according to an aspect includes an acquisition unit, an order information generator, a communication unit, and proposal information generator.

The acquisition unit is configured to acquire user-presented information presented by a user.

The order information generator is configured to omit non-sharable information from among the acquired user-presented information or to convert the non-sharable information into alternative information, and to generate order information on a basis of the user-presented information, the non-sharable information being information that is not allowed to be provided to an external device.

The communication unit is configured to transmit the order information to the external device, and to receive external proposal information that is generated on a basis of the order information and transmitted by the external device.

The proposal information generator is configured to generate proposal information on a basis of the external proposal information.

In this information processing device, the order information generator omits non-sharable information or converts the non-sharable information into alternative information, and generates order information. This improves a performance in selection of information to be output to the external device, which results in being able to provide a user with services with improved convenience.

The order information generator may be configured to convert the non-sharable information into alternative information and to generate, on the basis of the user-presented information, order information that includes the alternative information.

The converting the non-sharable information into the alternative information may include changing information included in the non-sharable information to information with broader terms or substituting certain information with another information, the certain information being information with which personal information is specifiable, the other information being information with which personal information is difficult to specify.

The order information generator may be configured to further generate order confirmation information that includes the non-sharable information.

This permits a user to easily confirm his/her own order information.

The proposal information generator may be configured to generate the proposal information further on a basis of the non-sharable information.

Since this proposal information is information based on non-sharable information, it is possible to generate proposal information that can be easily understood by a user.

The proposal information generator may be configured to generate, on the basis of the non-sharable information, information regarding a proposed item corresponding to the specified region, the proposed item being a proposed item from among a plurality of proposed items in the proposal information.

The proposal information generator may be configured to generate at least a portion of the proposal information as an image, the image being an image in which a specified region in the proposal information is displayed with emphasis.

This permits a user to easily recognize the specified region.

A connection controller configured to control a communicative connection with the external device may be further included, and the connection controller may be configured to start establishing a connection with the external device after the order information is generated by the order information generator.

This permits a user to confirm the generated order information before a connection with the external device starts being established.

The information processing device may further include a presentation unit configured to present the proposal information generated by the proposal information generator.

The presentation unit may be configured to further present the order information generated by the order information generator.

This permits a user to confirm the order information, for example, before the order information is transmitted to the external device.

The proposal information generator may be configured to generate at least a portion of the proposal information as an image. In this case, the proposal information generator may be configured to generate the proposal information as an image and sound.

An information processing device according to another aspect includes an acquisition unit, an order information generator, and a communication unit. The acquisition unit is configured to acquire user-presented information presented by a user.

The order information generator is configured to omit non-sharable information from among the acquired user-presented information or to convert the non-sharable information into alternative information, and to generate order information on a basis of the user-presented information, the non-sharable information being information that is not allowed to be shared with a second information processing device.

The communication unit is configured to transmit the order information to the second information processing device.

The second information processing device receiving the order information includes an external proposal information generator configured to generate the external proposal information.

In this information processing device, the order information generator omits non-sharable information or converts the non-sharable information into alternative information, and generates order information. This improves a performance in selection of information to be acquired by the second information processing device, which results in being able to provide a user with services with improved convenience that are advantageous to the user.

An information processing method according to an aspect is performed by an information processing device being capable of being connected to an external device.

User-presented information presented by a user is acquired.

Non-sharable information from among the acquired user-presented information is omitted or converted into alternative information, the non-sharable information being information that is not allowed to be provided to the external device.

Order information is generated on a basis of the user-presented information.

The order information is transmitted to the external device.

External proposal information is received that is generated on a basis of the order information and transmitted by the external device.

Proposal information is generated on a basis of the external proposal information.

A connection with the external device may start being established after the order information is generated.

The non-sharable information may be converted into the alternative information using machine learning.

A program according to an aspect is a program that causes the information processing device to perform the information processing method.

### Advantageous Effects of Invention

As described above, the present technology makes it possible to provide a user with services with improved convenience.

Note that the effect described here is not necessarily limitative and may be any effect described in the present disclosure.

### Brief Description of Drawings

[Fig. 1] Fig. 1 illustrates an information processing system that includes an information processing device according to a first embodiment of the present technology.
[Fig. 2] Fig. 2 is a block diagram of a configuration of an assistant device.
[Fig. 3] Fig. 3 is a sequence diagram that illustrates an operation of the information processing system.
[Fig. 4] Fig. 4 illustrates information stored in a database in a first specific example.
[Fig. 5] Fig. 5A illustrates an example of order information and Fig. 5B illustrates an example of order confirmation, information.
[Fig. 6] Fig. 6 illustrates order information presented during a wait for proposal information to be provided.
[Fig. 7] Fig. 7 illustrates an example of the proposal information.
[Fig. 8] Fig. 8 illustrates information stored in the database in a second specific example.
[Fig. 9] Fig. 9 is a table in which the sharable information and the non-sharable information in the first and second specific examples are put together.
[Fig. 10] Fig. 10 illustrates a configuration of an information processing system that includes an information processing device according to a second embodiment.
[Fig. 11] Fig. 11 is a sequence diagram that illustrates an operation of the information processing device.
[Fig. 12] Fig. 12 is a modification of the sequence illustrated in Fig. 11.
[Fig. 13] Fig. 13A illustrates order information presented by a first assistant device. Fig. 13B illustrates external proposal information presented by a second assistant device.

### Mode(s) for Carrying Out the Invention

Embodiments according to the present technology will now be described below with reference to the drawings.

### 1. First Embodiment

### 1.1) Configuration of Information Processing System

Fig. 1 illustrates an information processing system that includes an information processing device according to a first embodiment of the present technology. The information processing system includes an external device 80 on a cloud and an assistant device 10 that is an information processing device and is capable of being connected to the external device 80.

Using the assistant device 10, a user P can acquire information related to services provided by the external device 80. For example, when an organization, an institution, or a company that has the external device 80 provides the user P with services, the external device 80 receives an order related to the services from the user P through the assistant device 10.

Fig. 2 is a block diagram of a configuration of the assistant device 10. The external device 80 is a server computer on a cloud. An example of a network constituting the cloud is, for example, the Internet defined in the IP.

The assistant device 10 includes hardware that is a projector 11, a speaker 12, a camera 13, and a microphone 14, and further includes a projector controller 11a, a speaker controller 12a, a camera controller 13a, and a microphone controller 14a. These controllers 11a, 12a, 13a, and 14a each perform, for example, a drive control, an A/D conversion, or a D/A conversion on the respective piece of hardware.

The assistant device 10 includes a communication unit 18, an analysis/recognition unit 15, an information generator/controller 25, a speech controller 16, a video signal processing unit 17, a database 20, and a database management unit 19.

The communication unit 18 is a network interface that makes it possible to establish a communicative connection with the external device 80.

The analysis/recognition unit 15 has a function that analyzes user-presented information that is information provided by a user to recognize what the user-presented information means. The user-presented information is input from at least one of the camera 13 or the microphone 14. At least one of the camera 13, the microphone 14, or the analysis/recognition unit 15 serves as "an acquisition unit" that acquires the user-presented information.

The information generator/controller 25 has a function that generates order information on the basis of the user-presented information analyzed by the analysis/recognition unit 15. The order information is information obtained by putting one or more orders included in the user-presented information together. Further, the information generator/controller 25 has a function that generates proposal information on the basis of external proposal information proposed by the external device 80, as described later. In this case, the information generator/controller 25 serves as an "order information generator" and a "proposal information generator".

The speech controller 16 is configured to perform a control to output (provide a speech of) the information generated by the information generator/controller 25 through the speaker 12.

The database 20 includes two data storing regions. One is a sharable information region 21 that stores therein sharable information that is allowed to be provided to the external device 80 (that is allowed to be shared with the external device 80). The other is a non-sharable information region 23 that stores therein non-sharable information that is not allowed to be provided to the external device 80 (that is not allowed to be shared with the external device 80). The database management unit 19 is an interface that manages an access to the database 20 made by the analysis/recognition unit 15 and the information generator/controller 25.

The video signal processing unit 17 has a function that outputs (presents), as a video (an image), information generated by the information generator/controller 25 through the projector 11. At least one of the speaker 12, the projector 11, the speaker controller 12a, the projector controller 11a, or the information generator/controller 25 serves as a "presentation unit" that presents information to a user.

The information generator/controller 25, the analysis/recognition unit 15, the speech controller 16, the video signal processing unit 17, and the database management unit 19, as well as the projector controller 11a and the like are provided by hardware such as CPU (Central Processing Unit), RAM (Random Access Memory), and ROM (Read Only Memory), or by software stored in the RAM and the ROM. A PLD (Programmable Logic Device) such as FPGA (Field Programmable Gate Array) may be used instead of, or in addition to the CPU.

At least one of the video signal processing unit 17, the communication unit 18, or the projector controller 11a or the like may be constituted of modularized hardware. The database 20 is constituted of, for example, a semiconductor storage or a magnetic recording device.

### 1.2) Operation of Information Processing System

### 1.2.1) First Specific Example

Fig. 3 is a sequence diagram that illustrates an operation of the information processing system. An operation of the information processing system is described together with a specific example (first specific example) in which, for example, a user is provided with proposal services of a travel plan by a travel agency when the travel agency has the external device 80.

First, a user presents an order that is user-presented information to the assistant device 10. For example, sound information provided by a speech of the user is input to the microphone 14 (Step 101). The user-presented information includes sharable information and non-sharable information in a mixed manner.

Specifically, it is assumed that the user is a father of a family who has a daughter (first daughter). The following are examples of the user-presented information.

"Wish to go to Oahu Island for 4 days and 3 nights with family during a first daughter's summer vacation",
"Budget is about 300,000 JPY",
"First daughter wishes to play on a beach", and
"Wish to avoid XX Hotel this time since it was dirty when I previously went to Oahu Island".

The analysis/recognition unit 15 analyzes the sound and recognizes the content of the sound (Step 102). Then, the analysis/recognition unit 15 outputs data of it to a data management unit and the information generator/controller 25. The data management unit stores the data in the database 20. The data is grouped into sharable information and non-sharable information, and the sharable information and the non-sharable information are respectively stored in the sharable information region 21 and the non-sharable information region 23.

The following is a method for grouping user-presented information into sharable information and non-sharable information.

For example, it is a method using information preset by a user as non-sharable information. In this case, for example, the user presets a keyword and stores it in the non-sharable information region 23. The keyword may be updated by a manipulation performed by the user.

Alternatively, after Step 102 and before Step 103, the assistant device 10 may inquire of a user at one time whether user-presented information is non-sharable information, using an image or sound. The assistant device 10 may create a database of sharable information and non-sharable information during such a work process.

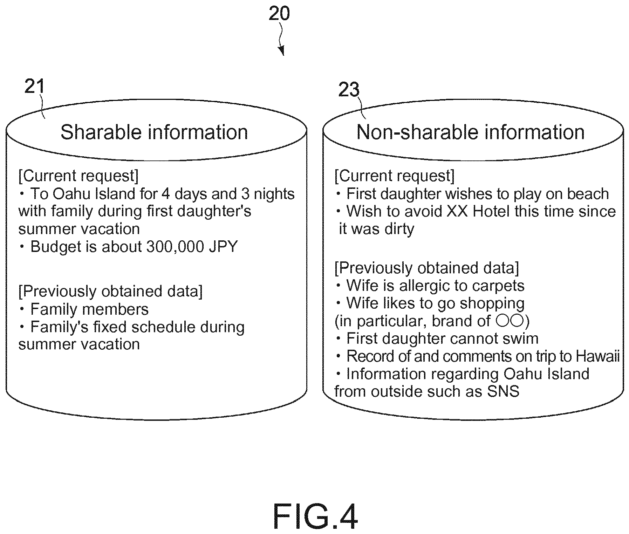

Fig. 4 illustrates information stored in the database 20 (the sharable information region 21 and the non-sharable information region 23). The following are specific examples of the information stored in the sharable information region 21.

"Wish to go to Oahu Island for 4 days and 3 nights with family during a first daughter's summer vacation", and
"Budget is about 300,000 JPY"
are stored as current requests.

Further, information such as family members and a family's fixed schedule during summer vacation is stored as previously obtained data.

On the other hand, the following are examples of the information stored in the non-sharable information region 23.

"First daughter wishes to play on a beach", and
"Wish to avoid XX Hotel this time since it was dirty"
are stored as current requests.

Further,
"Wife is allergic to carpets",
"Wife likes to go shopping (in particular, a brand of oo)", "First daughter cannot swim", and
other information such as a record of and comments on the family's trip to Hawaii, and information regarding Oahu Island from the outside (such as information from, for example, SNS (Social Networking Service))
are stored as previously obtained data.

Referring to Fig. 3, the information generator/controller 25 generates order information on the basis of the user-presented information described above (Step 103). In this case, the information generator/controller 25 omits non-sharable information from among the user-presented information or converts the non-sharable information into alternative information. Then, when the non-sharable information is converted into alternative information, the information generator/controller 25 generates order information including the alternative information. Further, the information generator/controller 25 can also generate order confirmation information including the non-sharable information.

Here, the process of omitting non-sharable information from among user-presented information includes, for example, a process of deleting the non-sharable information or a process of substituting the non-sharable information with invalid information such as a null value. On the other hand, the process of converting non-sharable information from among the user-presented information into alternative information is a process of converting, into sharable information, information that a user does not wish to share with an external device. For example, the conversion process includes, for example, a process of changing information included in non-sharable information to information with broader terms, and a process of replacing certain information by another information (anonymization process), the certain information being information with which personal information can be specified, the other information being information with which it is difficult to specify personal information.

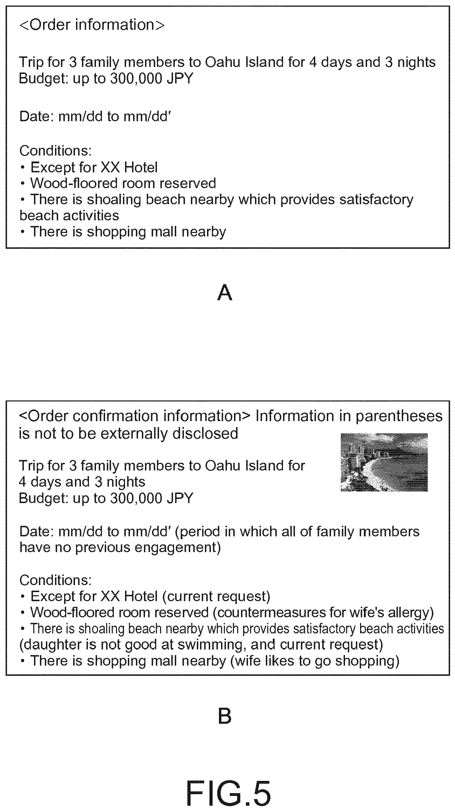

Fig. 5A illustrates an example of order information, and Fig. 5B illustrates an example of order confirmation information. The information generator/controller 25 presents these pieces of information as, for example, an image using the projector 11. The order information is information transmitted to the external device 80 in Step 106. The order confirmation information is not transmitted to the external device 80 since it includes non-sharable information.

The assistant device 10 presents at least one of the order information or the order confirmation information before the assistant device 10 starts establishing a communicative connection with the external device 80 (Step 104). In other words, the information generator/controller 25 starts establishing a communicative connection after the order information is generated.

As illustrated in Fig. 5A, the order information includes at least sharable information, and may include alternative information. On the other hand, as illustrated in Fig. 5B, the order confirmation information includes both sharable information and non-sharable information. In these examples, the sharable information is presented as alternative information. Thus, the order confirmation information illustrated in Fig. 5B includes both alternative information and non-sharable information.

The following are examples of sharable information.
"Trip for 3 family members to Oahu Island for 4 days and 3 nights, Budget: up to 300,000 JPY", and
"Date: mm/dd to mm/dd'".

The following are examples of alternative information.
"Except for XX Hotel",
"Wood-floored room",
"There is near the hotel a shoaling beach which provides satisfactory beach activities", and
"There is a shopping mall near the hotel".

Further, the following are pieces of information of non-sharable information, with the pieces of information being enclosed in parentheses.
(Current request),
(countermeasures for wife's allergy),
(daughter is not good at swimming, and current request), and
(wife likes to go shopping).

A user can confirm whether order information includes non-sharable information by reviewing the order information. In particular, the user can confirm that non-sharable information is appropriately converted into alternative information. If an appropriate conversion is not performed, the user can make a request for the assistant device 10 to make a correction.

On the other hand, the user can easily confirm both non-sharable information and information alternative to the non-sharable information by reviewing order confirmation information also including the non-sharable information.

For example, machine learning techniques are used as means for performing a process of converting non-sharable information into alternative information. Examples of machine learning include various known techniques such as a broader-term extraction, clustering, a neural-network technology, SVM (Support Vector Machine), and genetic programming. Alternatively, the means for performing a conversion process may be a technique obtained by combining at least two thereof.

A look-up table for conversion that is generated in advance, is another example of the means for performing a process of converting non-sharable information into alternative information. For example, a user can generate the look-up table by inputting information to the look-up table.

Referring to Fig. 3, after the user confirms the order information and/or the order confirmation information, the assistant device 10 reports that the assistant device 10 has established a connection with the external device 80 (Step 105). In other words, this starts a communication performed using the communication unit 18. Then, the information generator/controller 25 transmits the generated order information to the external device 80 through the communication unit 18 (Step 106). Here, the information generator/controller 25 serves as a "communication controller".

The information generator/controller 25 may inquire of the user, for example, whether "is it possible to place an order with this content?" Such an inquiry is made using, for example, sound, but it may be made using an image. In this case, when a response for approval is received from the user after the inquiry is made, a connection starts being established by the communication unit 18.

As described above, the presentation of order information and/or order confirmation information in Step 104 before the order information is transmitted, permits a user to confirm with certainty that non-sharable information is omitted or converted into alternative information.

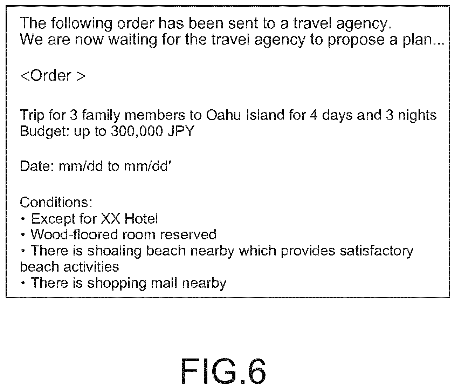

When the external device 80 receives the order information, the external device 80 generates external proposal information on the basis of the received order information (Step 107). Here, for example, the assistant device 10 may also present an image indicating that it is now a state of waiting for a proposal plan, as illustrated in Fig. 6. Information indicated in the image is similar to the substantive content of the order information illustrated in Fig. 5A. When the external device 80 generates the external proposal information, the external device 80 transmits the generated external proposal information to the assistant device 10 (Step 108).

The assistant device 10 generates proposal information on the basis of the received external proposal information (Step 109), and presents the generated proposal information to the user (Step 110). Typically, the proposal information includes the external proposal information.

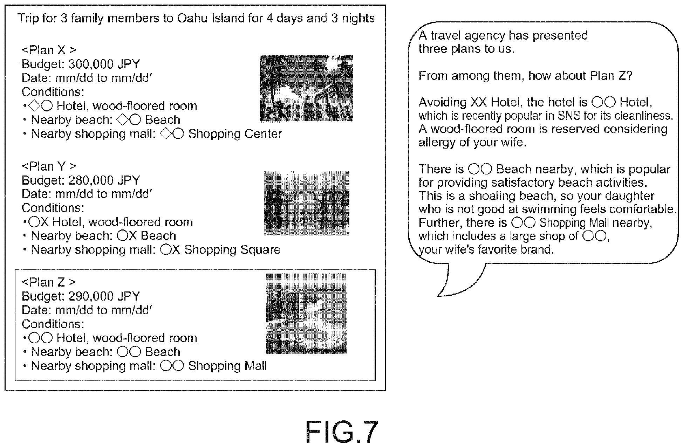

Fig. 7 illustrates an example of the proposal information. Fig. 7 illustrates, on the left, information in an image from among the proposal information, and illustrates, on the right, a content of information presented using sound.

As indicated in the proposal information presented in the image (refer to the left in Fig. 7), this proposal information includes a plurality of proposed items. These proposed items respectively correspond to three plans (X, Y, and Z) that are included in the external proposal information proposed by the external device 80. The information generator/controller 25 can generate the proposal information on the basis of non-sharable information.

For example, one of the methods for generating proposal information based on non-sharable information is a method including: generating an image in which a specified region in external proposal information is displayed with emphasis; and using the generated image as a portion of or the entirety of proposal information. For example, it is sufficient if an image is generated such that a plan that best meets conditions including those indicated by non-sharable information, is displayed with emphasis.

Although the external proposal information does not indicate which of the three plans is superior to which of the others, the proposal information displays, with emphasis, a recommended plan (Plan Z) from among the three plans. Fig. 7 illustrates an example in which a specified region (a region in which information regarding Plan Z exists) is boxed in using lines. This permits a user to easily recognize the specified region.

The "specified region" to be displayed with emphasis is not limited to a region, and it may be a text itself. For example, examples of a display with emphasis are changing, for example, a color, a type of line, a thickness of line, a font, or a size of a specified region, and adding a specified object image or an animation.

Proposal information including a display with emphasis is not necessarily generated on the basis of non-sharable information, and may be generated according to another specified algorithm.

Another one of the methods for generating proposal information based on non-sharable information is a method for including non-sharable information in external proposal information. Specifically, as illustrated on the right in Fig. 7, the information generator/controller 25 presents information including non-sharable information using sound. Of course, the content of the sound information may be presented, using an image, on the side of the information situated on the left in Fig. 7. The following are examples of non-sharable information and of information including the non-sharable information.

"XX Hotel to be avoided, Recently popular for its cleanliness in SNS",
"Daughter who is not good at swimming", and
"Brand of ○○ that wife likes".

As described above, since the information generator/controller 25 generates proposal information on the basis of external proposal information and non-sharable information, the information generator/controller 25 can generate proposal information that can be easily understood by a user.

The following is yet another example of the method for generating proposal information based on non-sharable information. From among a plurality of proposed items in proposal information, the information generator/controller 25 can generate, on the basis of non-sharable information, information regarding a proposed item corresponding to a specified region. In other words, the information generator/controller 25 adds at least a portion of the content of non-sharable information to a proposed item (information regarding "Plan Z" displayed with emphasis in the example illustrated in Fig. 7) from among a plurality of proposed items in proposal information, and displays the proposed item.

The assistant device 10 may communicatively disconnect from the external device 80 before the proposal information is presented.

Referring to Fig. 3, the user reports to the assistant device 10 that he/she has decided to adopt a selected plan (for example, Plan Z) (Step 111). The assistant device 10 makes a request to reserve the adopted plan (Step 112). The external device 80 accepts the reservation (Step 113).

In the description above, a user inputs information to the assistant device 10 using sound. However, a user may input information using an input device (a keyboard, a pen, a mouse, or a touch manipulation) or using a movement of the body such as a gesture. Alternatively, the input may be performed using sound and at least one of these inputs in combination. The same applies to other specific examples described later.

The assistant device 10 presents order information, order confirmation information, and proposal information using an image, but the assistant device 10 may present them only using sound or using both sound and an image. The same applies to other specific examples described later.

As described above, in the first embodiment, the assistant device 10 omits non-sharable information or converts the non-sharable information into alternative information, and generates order information. This improves a performance in selection of information to be output to the external device 80, which results in being able to provide a user with services with improved convenience.

In the present first embodiment, the information generator/controller 25 modifies external proposal information or includes non-sharable information in the external proposal information, and presents the external proposal information as proposal information on the basis of the external proposal information. However, the information generator/controller 25 may present, as proposal information, the substantive content of external proposal information without any change.

### 1.2.2) Second Specific Example

Next, a second specific example in which the user is a farther who has a daughter (first daughter) and is provided with proposal services of a plan for his first daughter's preparatory school by the external device 80, is described. The sequence of processes in the second specific example is similar to that illustrated in Fig. 3. Further, regarding the operations of the assistant device 10 and the external device 80, descriptions of operations similar to those illustrated in Fig. 3 are omitted in the second specific example.

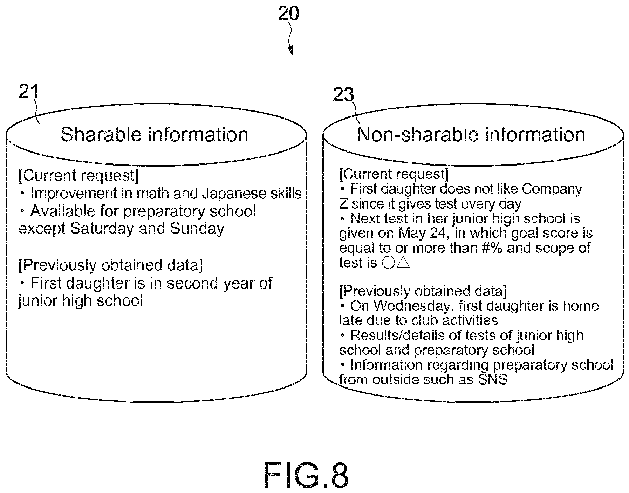

Fig. 8 illustrates information stored in the database 20. The following are examples of user-presented information, which are illustrated in Fig. 8.

The following are current requests from among sharable information.
"Wish to improve math and Japanese skills", and
"Available for a preparatory school except Saturday and Sunday".

"First daughter is in the second year of a junior high school" is previously obtained data from among the sharable information.

The following are current requests from non-sharable information.

"First daughter does not like Company Z since it gives a test every day", and
"Next test in her junior high school is given on May 24, in which the goal score is equal to or more than oX and the scope of the test is ○Δ".

"On Wednesday, first daughter is home late due to club activities"
is previously obtained data from among the non-sharable information. In addition, the non-sharable information includes a result/the details of tests of a junior high school and a preparatory school, and information regarding a preparatory school from the outside such as SNS.

The information generator/controller 25 generates order information on the basis of the user-presented information described above (Step 103) (refer to Fig. 3).

Although a specific example of the order information is not illustrated, the order information is constituted of the following. Information enclosed in parentheses indicates a reason for the order, and includes the non-sharable information described above.

The preparatory school is "Company Y": ("First daughter does not like Company Z since it gives a test every day", and "Company Y is popular in SNS" in the non-sharable information);
the term is set to "until May 23": ("Next test in her junior high school is given on May 24" in the non-sharable information);
the target subjects are "math and Japanese of the second year of a junior high school": ("Wish to improve math and Japanese skills", and "First daughter is in the second year of a junior high school" in the sharable information);
the study area to be improved is ○Δ: (the scope of the test is ○Δ" in the non-sharable information); and
it is possible to go to a preparatory school "except Wednesday, Saturday, and Sunday": ("On Wednesday, first daughter is home late due to club activities" in the non-sharable information).

In Fig. 3, the external device 80 generates external proposal information after Steps 104 to 106 are performed (Step 107). The assistant device 10 generates proposal information on the basis of the external proposal information transmitted from the external device 80 (Steps 108 and 109). The proposal information is then presented to the user (Step 110).

As described above, the proposal information is information obtained by modifying the external proposal information using a display with emphasis, or information obtained by including non-sharable information in the external proposal information, or information that is the external proposal information virtually presented without any change.

Although a specific example of the proposal information is not illustrated, it is assumed that plans of, for example, two preparatory-school companies, Company X and Company Y, are presented . Between the two, the information generator/controller 25 determines that Company Y is to be recommended and generates proposal information, on the basis of non-sharable information. The following are examples of the content of the proposal information. Information enclosed in square brackets is information based on non-sharable information.

"How about ○○ Plan of Company Y, Level B of Math & Japanese Course? Company Y gives a test only once a week. This ○○ Plan appears to be [popular for a private class depending on the level of a student]. This plan has a schedule until the day before the next test, avoids [Wednesday on which your daughter is home late due to club activities], as well as Saturday and Sunday as requested, and satisfies [scope of the test is ○Δ]. Thus, we think that this plan meets your wishes considering [next test is given on May 24]. Regarding the level, we consider that Level B of this ○○ Plan would be most appropriate in order to clear [next goal score is equal to or more than ○X]".

Subsequently, Steps 111 to 113 are performed.

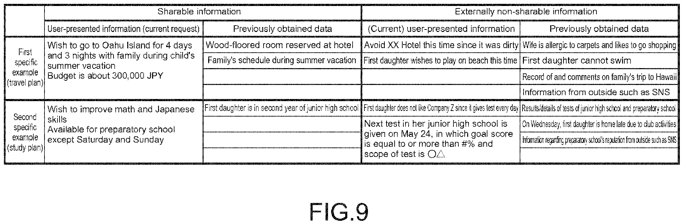

The sharable information and the non-sharable information in the first and second specific examples described above are given in Fig 9.

### 2. Second Embodiment

### 2.1) Configuration of Information Processing System

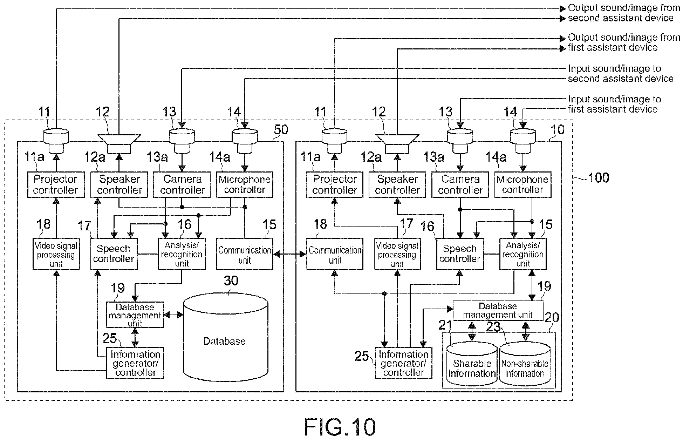

Fig. 10 illustrates a configuration of an information processing system that includes an information processing device according to a second embodiment. In the following descriptions, regarding, for example, functions and operations of the information processing system and the information processing device, descriptions of elements substantially similar to those of the information processing system and the information processing device according to the first embodiment, are simplified or omitted, and a description is made focused on a point of difference.

An information processing system 100 according to the second embodiment includes a first assistant device 10 (information processing device) possessed by a user, and a second assistant device 50 (second information processing device) possessed by, for example, a company that provides services. This system may have a configuration in which, for example, the company or the like lends the second assistant device 50 to a user. A user can place the first assistant device 10 and the second assistant device 50 in the same interior space or in the same room.

The first assistant device 10 has a configuration substantially similar to the configuration of the assistant device 10 according to the first embodiment. The second assistant device 50 has a configuration substantially similar to the configuration of the first assistant device 10, and has a different content in a database 30. The database 30 of the second assistant device 50 stores therein, for example, customer information and data necessary for services.

### 2.2) Operation of Information Processing System

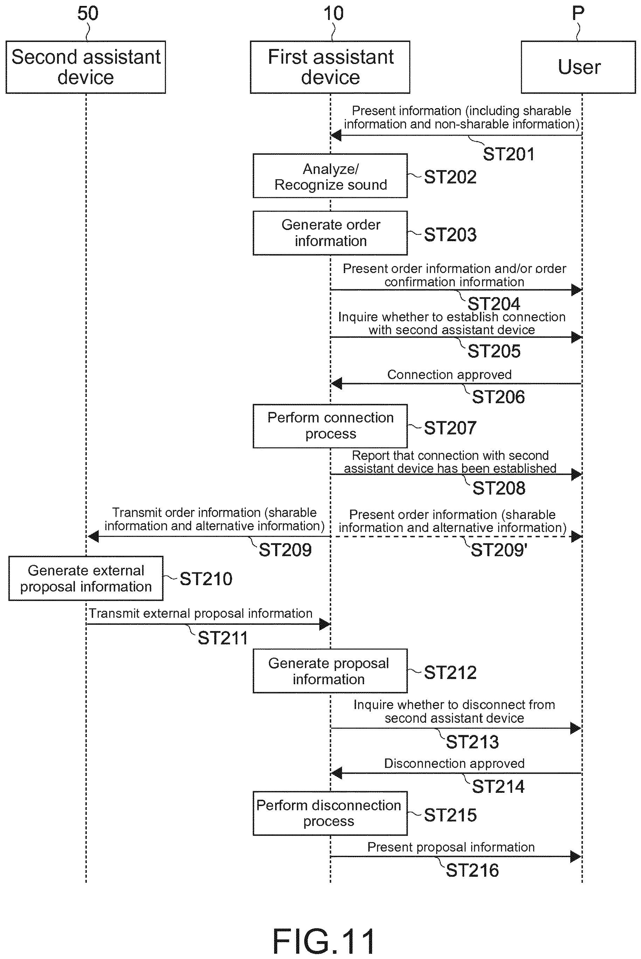

Fig. 11 is a sequence diagram that illustrates an operation of the information processing device 100. An operation different from that in the first embodiment is described below.

After order information (refer to, for example, Fig. 5A) and/or order confirmation information (refer to, for example, Fig. 5B) is presented in Step 204, the first assistant device 10 inquires, in Step 205, of the user whether to establish a connection with the second assistant device 50. When the user approves the connection (Step 206), the first assistant device 10 performs a connection process (Step 207).

The first assistant device 10 transmits the generated order information to the second assistant device 50 (Step 209). At the same time as Step 209, or before or after Step 209, the first assistant device 10 may present order information that does not include non-sharable information, not order confirmation information that includes non-sharable information (Step 209'). In the present embodiment, a position onto which an image is projected by the projector 11 of the first assistant device 10 may be, for example, in a range in which the camera 13 of the second assistant device 50 performs image-capturing. Thus, the first assistant device 10 presents, as an image allowed to be acquired by the second assistant device 50, order information (refer to Fig. 5A) that does not include non-sharable information (includes, for example, alternative information).

The first assistant device 10 inquires whether to disconnect from the second assistant device 50 (Step 213). When the user approves the disconnection (Step 214), the first assistant device 10 performs disconnection (Step 215). Then, the first assistant device 10 presents proposal information generated in Step 212 (Step 216).

After Step 216, the processes of Steps 111 to 113 are performed as in the case of the processes illustrated in Fig. 3. In this case, it is sufficient if the first assistant device 10 performs a process of establishing a communicative connection with the second assistant device 50 again and performs Step 112.

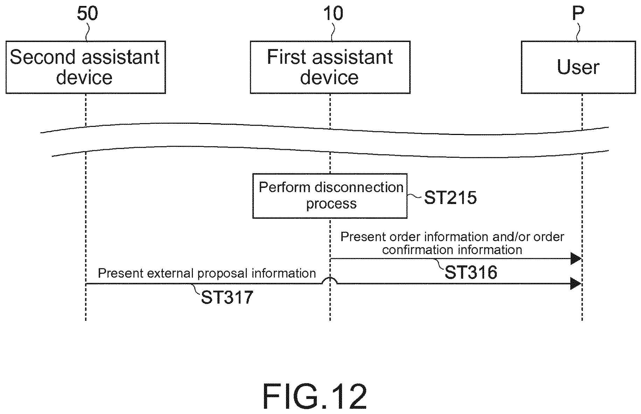

Here, After Step 215, the first assistant device 10 may present the order information and/or the order confirmation information generated in Step 203 (Step 316) (refer to Fig. 12). Further, the second assistant device 50 may present external proposal information (Step 317). For example, when order information (or order confirmation information) is presented in an image, and external proposal information is also presented in an image, the first assistant device 10 and the second assistant device 50 may present the images at the same time using the respective projectors 11.

In this case, at least one of the projector 11, the projector controller 11a, the speaker 12, the speaker controller 12a, or the information generator/controller 25 of the first assistant device 10 serves as a "first presentation unit". Further, at least one of the projector 11, the projector controller 11a, the speaker 12, the speaker controller 12a, or the information generator/controller 25 of the second assistant device 50 serves as a "second presentation unit".

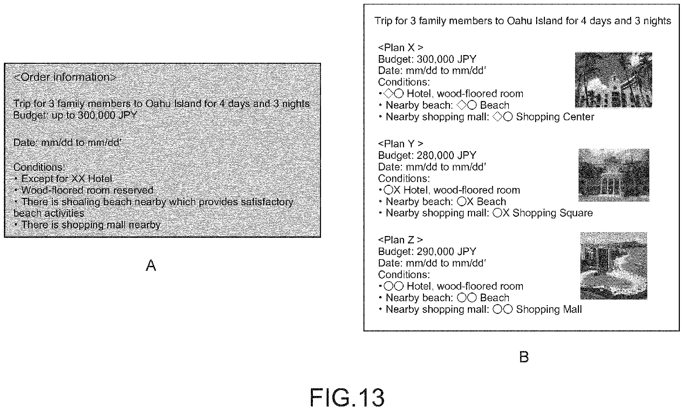

Figs. 13A and 13B illustrate respective images presented at the same time, as described above. Fig. 13A illustrates order information presented by the first assistant device 10. Fig. 13B illustrates external proposal information presented by the second assistant device 50.

Note that the content of the order information illustrated in Fig. 13 is similar to that of Fig. 5A. The external proposal information illustrated in Fig. 13B is similar to external proposal information before it is modified to be presented as the proposal information illustrated in Fig. 7A (that is, without a display with emphasis).

As described above, when the two images are displayed at the same time, a process of specifying which of the images is information presented by the first assistant device 10 or the second assistant device 50, may be performed. For example, as illustrated in Fig. 13A, the color of the background of an image may be set to a specified color. Alternatively, for example, inserting the names of these assistant devices 10 into the respective corresponding images, and causing one of the images to blink are taken as examples. In addition, for example, mentioning, using sound, the name of an assistant device that has presented an image when the image starts being presented, is taken as an example.

The two images illustrated in Fig. 13 do not necessarily have to be presented at the same time. In this case, the two images may be sequentially presented by one of the first assistant device 10 and the second assistant device 50.

The first assistant device 10 may include a control-signal output unit (not illustrated) that outputs, to the second assistant device 50, a signal that controls a specified process performed by the second assistant device 50.

The specified process is a process of turning off, for example, the function of the camera 13 or the microphone 14 of the second assistant device 50 (stop inputting a signal), or a process of turning off the function of the projector 11 or the speaker 12 (stop outputting a signal). Alternatively, the first assistant device 10 may control the content of information presented by the second assistant device 50 (a content of display and/or a content of sound). Alternatively, the first assistant device 10 may control a communicative connection (a start of establishing a connection, or disconnection) in the communication unit 18.

### 3. Other Various Embodiments

The present technology is not limited to the embodiments described above, but can realize other various embodiments.

The assistant device 10 (the first assistant device 10) and the second assistant device 50 in the embodiments described above each include the camera 13, the microphone 14, the projector 11, and the speaker 12. A configuration in which at least one of the camera 13, the microphone 14, the projector 11, or the speaker 12 is a device that exists independently of the others, and the device is connected to a corresponding assistant device, may be made.

The information processing system 100 according to the second embodiment described above physically includes two assistant devices. However, the information processing device may be physically constituted of a single device, and the single device may be configured to perform processes by switching the two assistant devices functionally and logically.

The processes of Steps 205 to 207 in the second embodiment described above (refer to Fig. 11) may be performed in the first embodiment between Step 104 and Step 105.

The present technology is also applicable to the medical field. For example, a user can place an order with or consult the external device 80 (or the second assistant device 50) possessed by a medical institution through the assistant device 10 (or the first assistant device 10) that can be connected to the external device 80 (or the second assistant device 50).

At least two features from among the features of the embodiments described above can also be combined.

Note that the present technology may also take the following configurations.
(1) An information processing device including:
   an acquisition unit configured to acquire user-presented information presented by a user;
   an order information generator configured to omit non-sharable information from among the acquired user-presented information or to convert the non-sharable information into alternative information, and to generate order information on a basis of the user-presented information, the non-sharable information being information that is not allowed to be provided to an external device;
   a communication unit configured to transmit the order information to the external device, and to receive external proposal information that is generated on a basis of the order information and transmitted by the external device; and
   a proposal information generator configured to generate proposal information on a basis of the external proposal information.
(2) The information processing device according to (1), in which
   the order information generator is configured to convert the non-sharable information into alternative information and to generate, on the basis of the user-presented information, order information that includes the alternative information.
(3) The information processing device according to (2), in which
   the converting the non-sharable information into the alternative information includes changing information included in the non-sharable information to information with broader terms or substituting certain information with another information, the certain information being information with which personal information is specifiable, the other information being information with which personal information is difficult to specify.
(4) The information processing device according to (2) or (3), in which
   the order information generator is configured to further generate order confirmation information that includes the non-sharable information.
(5) The information processing device according to any one of (1) to (3), in which
   the proposal information generator is configured to generate the proposal information further on a basis of the non-sharable information.
(6) The information processing device according to (5), in which
   the proposal information generator is configured to generate at least a portion of the proposal information as an image, the image being an image in which a specified region in the proposal information is displayed with emphasis.
(7) The information processing device according to (6), in which
   the proposal information generator is configured to generate, on the basis of the non-sharable information, information regarding a proposed item corresponding to the specified region, the proposed item being a proposed item from among a plurality of proposed items in the proposal information.
(8) The information processing device according to any one of (1) to (7), further including
   a connection controller configured to control a communicative connection with the external device, the connection controller being configured to start establishing a connection with the external device after the order information is generated by the order information generator.
(9) The information processing device according to any one of (1) to (8), further including
   a presentation unit configured to present the proposal information generated by the proposal information generator.
(10) The information processing device according to (9), in which
   the presentation unit is configured to further present the order information generated by the order information generator.
(11) The information processing device according to (1), in which
   the proposal information generator is configured to generate at least a portion of the proposal information as an image.
(12) The information processing device according to (11), in which
   the proposal information generator is configured to generate the proposal information as an image and sound.
(13) An information processing device including:
   an acquisition unit configured to acquire user-presented information presented by a user;
   an order information generator configured to omit non-sharable information from among the acquired user-presented information or to convert the non-sharable information into alternative information, and to generate order information on a basis of the user-presented information, the non-sharable information being information that is not allowed to be shared with a second information processing device; and
   a communication unit configured to transmit the order information to the second information processing device, in which
   the second information processing device receiving the order information includes an external proposal information generator configured to generate the external proposal information.
(14) The information processing device according to (13), further including
   a communication controller configured to control a communicative connection with the second information processing device, the communication controller being configured to start establishing a connection with the second information processing device after the order information is generated by the order information generator.
(15) The information processing device according to (13) or (14), further including
   a first presentation unit configured to present the order information.
(16) The information processing device according to (15), further including
   a second presentation unit configured to present the external proposal information.
(17) The information processing device according to (16), in which
   the first presentation unit is configured to present at least a portion of the order information as an image, and
   the second presentation unit is configured to present at least a portion of the external proposal information as an image.
(18) The information processing device according to any one of (13) to (17), further including
   a control-signal output unit configured to output, to the second information processing device, a signal that controls a specified process performed by the second information processing device.
(19) An information processing method performed by an information processing device being capable of being connected to an external device, the information processing method including:
   acquiring user-presented information presented by a user;
   omitting non-sharable information from among the acquired user-presented information or converting the non-sharable information into alternative information, the non-sharable information being information that is not allowed to be provided to the external device;
   generating order information on a basis of the user-presented information;
   transmitting the order information to the external device;
   receiving external proposal information that is generated on a basis of the order information and transmitted by the external device; and
   generating proposal information on a basis of the external proposal information.
(20) A program that causes an information processing device to perform a process, the information processing device being capable of being connected to an external device, the process including:
   acquiring user-presented information presented by a user;
   omitting non-sharable information from among the acquired user-presented information or converting the non-sharable information into alternative information, the non-sharable information being information that is not allowed to be provided to the external device;
   generating order information on a basis of the user-presented information;
   transmitting the order information to the external device;
   receiving external proposal information that is generated on a basis of the order information and transmitted by the external device; and
   generating proposal information on a basis of the external proposal information.

### Reference Signs List

- 10: assistant device, first assistant device
- 11: each projector
- 12: speaker
- 13: camera
- 14: microphone
- 18: communication unit
- 20,30: database
- 21: sharable information region
- 23: non-sharable information region
- 25: controller
- 50: second assistant device
- 80: external device

## Claims

1. An information processing device comprising:
an acquisition unit configured to acquire user-presented information presented by a user;
an order information generator configured to omit non-sharable information from among the acquired user-presented information or to convert the non-sharable information into alternative information, and to generate order information on a basis of the user-presented information, the non-sharable information being information that is not allowed to be provided to an external device;
a communication unit configured to transmit the order information to the external device, and to receive external proposal information that is generated on a basis of the order information and transmitted by the external device; and
a proposal information generator configured to generate proposal information on a basis of the external proposal information.

2. The information processing device according to claim 1, wherein
the order information generator is configured to convert the non-sharable information into alternative information and to generate, on the basis of the user-presented information, order information that includes the alternative information.

3. The information processing device according to claim 2, wherein
the converting the non-sharable information into the alternative information includes changing information included in the non-sharable information to information with broader terms or substituting certain information with another information, the certain information being information with which personal information is specifiable, the other information being information with which personal information is difficult to specify.

4. The information processing device according to claim 2, wherein
the order information generator is configured to further generate order confirmation information that includes the non-sharable information.

5. The information processing device according to claim 1, wherein
the proposal information generator is configured to generate the proposal information further on a basis of the non-sharable information.

6. The information processing device according to claim 5, wherein
the proposal information generator is configured to generate at least a portion of the proposal information as an image, the image being an image in which a specified region in the proposal information is displayed with emphasis.

7. The information processing device according to claim 6, wherein
the proposal information generator is configured to generate, on the basis of the non-sharable information, information regarding a proposed item corresponding to the specified region, the proposed item being a proposed item from among a plurality of proposed items in the proposal information.

8. The information processing device according to claim 1, further comprising
a connection controller configured to control a communicative connection with the external device, the connection controller being configured to start establishing a connection with the external device after the order information is generated by the order information generator.

9. The information processing device according to claim 1, further comprising
a presentation unit configured to present the proposal information generated by the proposal information generator.

10. The information processing device according to claim 9, wherein
the presentation unit is configured to further present the order information generated by the order information generator.

11. The information processing device according to claim 1, wherein
the proposal information generator is configured to generate at least a portion of the proposal information as an image.

12. The information processing device according to claim 11, wherein
the proposal information generator is configured to generate the proposal information as an image and sound.

13. An information processing device comprising:
an acquisition unit configured to acquire user-presented information presented by a user;
an order information generator configured to omit non-sharable information from among the acquired user-presented information or to convert the non-sharable information into alternative information, and to generate order information on a basis of the user-presented information, the non-sharable information being information that is not allowed to be shared with a second information processing device; and
a communication unit configured to transmit the order information to the second information processing device, wherein
the second information processing device receiving the order information includes an external proposal information generator configured to generate the external proposal information.

14. The information processing device according to claim 13, further comprising
a communication controller configured to control a communicative connection with the second information processing device, the communication controller being configured to start establishing a connection with the second information processing device after the order information is generated by the order information generator.

15. The information processing device according to claim 13, further comprising
a first presentation unit configured to present the order information.

16. The information processing device according to claim 15, further comprising
a second presentation unit configured to present the external proposal information.

17. The information processing device according to claim 16, wherein
the first presentation unit is configured to present at least a portion of the order information as an image, and
the second presentation unit is configured to present at least a portion of the external proposal information as an image.

18. The information processing device according to claim 13, further comprising
a control-signal output unit configured to output, to the second information processing device, a signal that controls a specified process performed by the second information processing device.

19. An information processing method performed by an information processing device being capable of being connected to an external device, the information processing method comprising:
acquiring user-presented information presented by a user;
omitting non-sharable information from among the acquired user-presented information or converting the non-sharable information into alternative information, the non-sharable information being information that is not allowed to be provided to the external device;
generating order information on a basis of the user-presented information;
transmitting the order information to the external device;
receiving external proposal information that is generated on a basis of the order information and transmitted by the external device; and
generating proposal information on a basis of the external proposal information.

20. A program that causes an information processing device to perform a process, the information processing device being capable of being connected to an external device, the process comprising:
acquiring user-presented information presented by a user;
omitting non-sharable information from among the acquired user-presented information or converting the non-sharable information into alternative information, the non-sharable information being information that is not allowed to be provided to the external device;
generating order information on a basis of the user-presented information;
transmitting the order information to the external device;
receiving external proposal information that is generated on a basis of the order information and transmitted by the external device; and
generating proposal information on a basis of the external proposal information.
